# EUROPEAN PATENT SPECIFICATION

(11) **EP 2 226 539 B1**
(45) Date of publication and mention of the grant of the patent: **16.10.2013**
(21) Application number: 09165178.6
(22) Date of filing: 10.07.2009
(51) Int. Cl.: F16K 17/04, F16K 17/06, F16K 15/02, F16K 1/30, B01F 3/04

(54) **Overpressure- and ventilating valve for an aeration device**
Überdruck- und Belüftungsventil für eine Belüftungsvorrichtung
Soupape de ventilation et de surpression pour dispositif d'aération

(30) Priority: 06.03.2009 SE 0950129
(43) Date of publication of application: 08.09.2010
(73) Proprietor: Aga AB, 181 81 Lidingö (SE)
(72) Inventor: Gustavsson, Rickard, 194 63 Upplands Väsby (SE)
(74) Representative: Gellner, Bernd

(56) References cited:
- EP-A- 0 455 811
- EP-A- 0 867 219
- DE-U1-202004 015 606
- US-A- 2 944 564
- US-A- 4 660 740

## Description

The present invention relates to an aeration device by the use of which water in a bottle is aerated by carbon dioxide being injected into the bottle using the aeration device.

Such aeration devices are previously known of various designs.

When water is to be aerated, a plastic bottle, which is furnished with external threads at its neck and filled with water, is screwed onto a threaded pipe end of the aeration device. The pipe end is connected, via a valve, to a gas bottle containing carbon dioxide. A control button is arranged to operate the valve to open so that gas flows from the gas bottle to the water bottle. Usually, the button is pressed in or down by the user. As the valve opens and carbon dioxide flows down into the water via a nozzle below the surface of the water, after a short time a pressure arises in the water bottle in excess of a maximum allowed pressure, because of the gas bottle having a higher pressure than that which the water bottle will finally have, whereby an overpressure valve opens. When the overpressure valve opens, the user releases the button, whereby the valve is closed and the bottle is ventilated by way of its interior being put into communication with the environment. This procedure is repeated a number of times until the user deems the water to be enough aerated.

A known aeration device of this type is described in the German utility model DE 20 2004 015 606. This device is arranged so that when the control button is pressed down and gas flows down into the water bottle and the overpressure valve is opened and the pressure thereafter has sunk, the button is released and the valve closes the connection between the gas bottle and the water bottle. At the closing of the valve, the valve at the same time opens a connection between the water bottle and the environment, which connection is open until the control button is again pressed down.

Hereby, a decompression thus takes place of the water bottle to atmospheric pressure. This leads to the disadvantage that carbon dioxide is not dissolved in the water during the time between two pressings of the control button, which leads to several aeration phases having to be accomplished in order to obtain a certain desired aeration of the water. Furthermore, the ventilated carbon dioxide is lost.

The present invention solves this problem and offers a very simple valve for the above mentioned purpose.

US 2,944,564 shows a valve which can be operated at two different pressures, where a conduit to the valve is used for feeding fluid to the valve in order to operate the valve at a higher pressure of the two pressures.

US 4,660,740 shows an apparatus for the gasification of liquid, such as water. There is an overpressure valve which is opened when the pressure in a chamber containing said liquid exceeds a predetermined pressure, whereafter the chamber is put in communication with the ambient air.

Thus the present invention relates to an aeration device for supplying carbon acid to water in a water bottle,
- where the neck of the water bottle is provided with a fastening means arranged to cooperate with a corresponding fastening means of a pipe end of the device,
- which pipe end is connected, via a controllable valve, with a gas bottle comprising carbon dioxide,
- which valve is opened by a user by the help of a non-locking first control means which may be pressed down or in so that gas flows from the gas bottle down into the water bottle via a nozzle,
- said aeration device further comprising an overpressure- and ventilating valve having a piston which is movable in a sleeve, which piston is displaceable between a first, closing position and a second, opening position,
wherein:
- the piston in the closing position is arranged to seal off a first outlet channel from the water bottle, arranged at a first end of the sleeve, and in the opening position to open the first outlet channel,
- a second outlet channel is arranged at the said first end of the sleeve, arranged so that in the opening position of the piston a connection between the first outlet channel and the environment via the second outlet channel is opened,
- a second control means is arranged in or at the sleeve and arranged to be displaceable in or at the sleeve towards and away from the first end of the sleeve,
- a spring is arranged between the piston and the end of the second control means located in or at the sleeve,
- the said spring has a spring constant such that the overpressure- and ventilating valve opens when the first control means is kept pressed down or in by a user and the pressure in the water bottle rises above a first predetermined value,
- a force is applied against the piston when the first control means is released by the user and has sprung back, which force is such that the overpressure- and venti lating valve closes when the pressure in the first outlet channel falls below a second predetermined value, which second predetermined value is between 1.1 and 1.5 bars.

In the following, the invention is described in closer detail, partly in connection with an exemplatory embodiment of the invention illustrated in the enclosed drawings, where
- Figure 1 shows an aeration device in which the invention is applied;
- Figures 2a - 2e show different positions for an overpressure- and ventilating valve according to the invention; and
- Figure 3 shows an alternative embodiment of the invention.

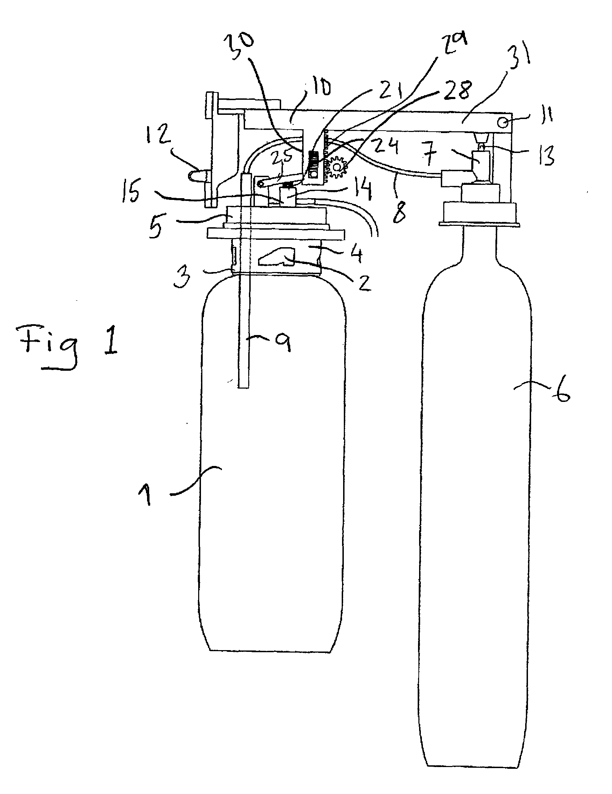

In Figure 1, an aeration device for adding carbonic acid to water in a water bottle 1 is shown, where the neck of the water bottle is furnished with a fastening means 2 arranged to cooperate with a corresponding fastening means 3 of a pipe end 4 of the device. The pipe end 4 is fastened to a pipe- and valve arrangement 5, and is connected, via a controllable valve 7, to a gas bottle 6 containing carbon dioxide. From the valve 7 a tube 8 runs to an orifice 9 running down into an attached water bottle 1. The said valve 7 is opened by a user by help of a non-locking first control means 10 which is capable of being pressed down or in. The control means 10 is rotatable about a hinge 11, and is operated by a user pressing down the control means by the help of a button 12. Hereby, the control means presses down an upwardly projecting tap 13 of the gas bottle valve 7, whereby the valve 7 is opened so that gas flows from the gas bottle 6 down into the water in the water bottle via the said nozzle 9.

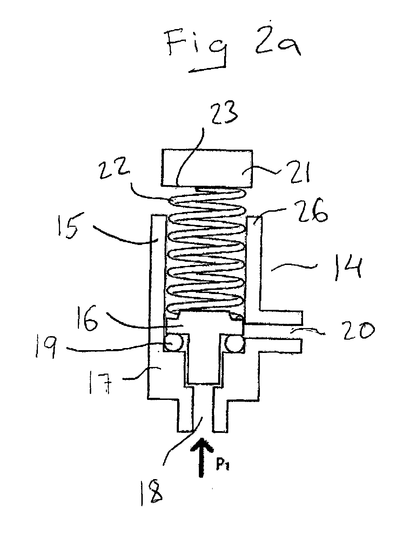

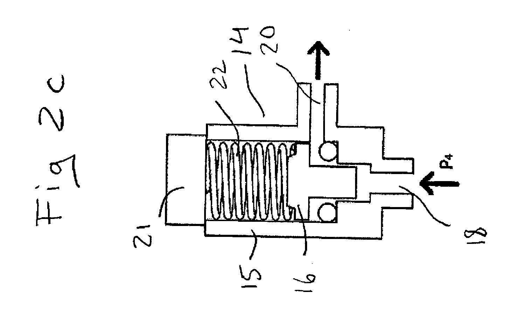

According to the invention, the aeration device comprises an overpressure- and ventilating valve 14 comprising a piston 16 movable in a sleeve 15, see Figure 2a, which piston is displaceable between a first, closing position, shown in Figure 2a, and a second, opening position, shown in Figure 2c.

The piston 16 when in its closing position is arranged to seal off an outlet channel 18, arranged at a first end 17 of the sleeve 15, from the water bottle 1. As sealing means, an O-ring 19 may be used. The piston 16, when in its opening position, is arranged to open the outlet channel 18, see Figure 2c.

A second outlet channel 20 is arranged at the said first end 17 of the sleeve 15, arranged so that a connection between the first outlet channel 18 and the environment via the second outlet channel 20 is opened in the opening position of the piston 16.

A second control means 21 is arranged in or at the sleeve, arranged to be displaceable in or at the sleeve 15 towards and away from the first end 17 of the sleeve, into and out from the sleeve 15, and partly or completely projecting out from the sleeve. This is influenced by the first control means 10 when pressed downwards in Figure 1 so that the second control means 21 is pressed downwards.

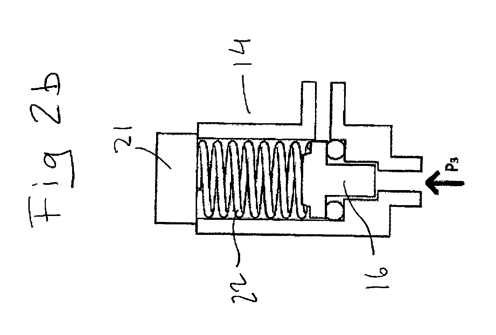

A spring 22 is arranged between the piston 16 and the second control means 21 in or at the end 23 located at the sleeve 15. The said spring 22 has a spring constant such that the overpressure- and ventilating valve 14 opens when the first control means 10 is kept pressed down or in by a user, and the pressure in the water bottle rises above a first predetermined value. The pressure in a suitable gas bottle is of the magnitude 10 bars. The pressure in the water bottle should not rise above 8 bars. Thus, when the first control means is pressed down and gas flows into the water bottle, the overpressure and ventilating valve is in the position shown in Figure 2b. When the pressure in the water bottle rises to the first predetermined pressure P4, for example 8 bars, the piston is pressed up against the spring force of the spring, so that the first outlet channel is connected to the environment via the second outlet channel 20. Hereby, the pressure in the water bottle drops, and the user releases the first control means 10, 12 when the user hears that the overpressure valve has opened. Then, the first control means returns to its original position, see Figure 2a.

According to the invention, a downward force is also being applied to the second control means 21 when the first control means 10, 12 has been released by the user and has sprung back. This force is such that the overpressure- and ventilating valve 14 opens when the pressure in the water bottle 1 surpasses a second predetermined value.

Once the overpressure valve has opened and the second control means 21 has sprung back, the pressure in the water bottle is for example 8 bars. The said downward force corresponds to a lower pressure in the water bottle, for example less than 1.5 bars.

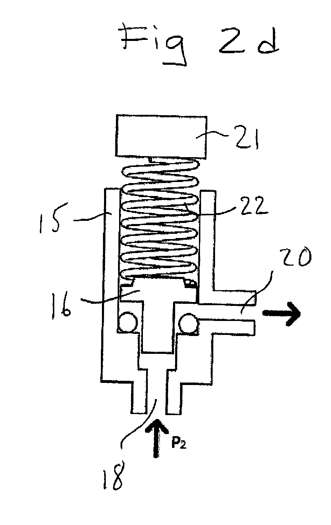

In other words, the piston remains in the position shown in Figure 2d, whereby the interior of the water bottle is connected with its surroundings via the outlet channels 18, 20 until the pressure in the water bottle has sunk to for example less than said 1.5 bars. Hereby, the overpressure- and ventilating valve 14 functions as a ventilating valve.

Thereafter, the overpressure- and ventilating valve 14 closes, because of the downward force increasing above the force P2 from the pressure in the water bottle.

The pressure P1 in Figure 2a, that is the starting position, is atmospheric pressure.
The pressure P3 in Figure 2b is the pressure during the pressurizing phase, that is above for example 8 bars.
The pressure P4 in Figure 2c is the pressure during the time when the overpressure valve is open.
The pressure P2 in Figure 2d is the pressure prevailing during the ventilating phase.

According to a preferred embodiment, the said force which is applied to the second control means 21 is applied by the first control means 10 bearing on the second control means by the force of gravity.

The first control means 10 comprises a spring 24 acting against one of the ends of an arm 25. The arm 25 acts directly against the second control means 21. The latter spring 24 is stronger than the spring 22 in the sleeve 15, and is aimed at springing back the first control means 10 when a user releases the button 12.

According to an alternative preferred embodiment, the said force, which is applied to the second control means is applied by the said spring 22 in the sleeve 15 exerting the said force as a remaining spring force when the first control means is released by the user and has sprung back.

To this end, it is preferred that the second control means 21 is displaceable in a limited manner relative the said second end 26 of the sleeve 15, giving rise to the said remaining spring force.

According to a preferred embodiment, the first control means 10 is displaceable in a limited manner relative to the said second end 26 of the valve 14, giving rise to the said remaining spring force.

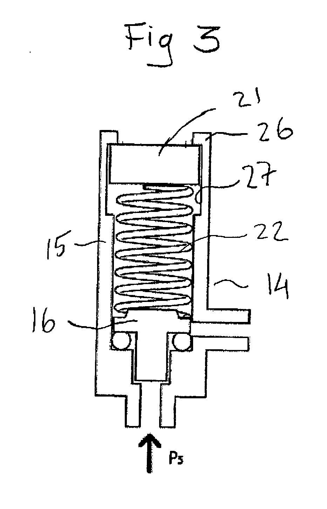

An exemplifying embodiment is shown in Figure 3, in which the sleeve 15 is fitted with a groove 27 in which the second control means 21 runs.

According to a preferred embodiment, the said first predetermined pressure is between 8 and 12 bars.

According to a preferred embodiment, the said second predetermined pressure is between 1.1 and 1.5 bars.

As described above, the valve 14 closes during ventilation at a pressure above atmospheric pressure, for example at a pressure of 1.1 bars. This means that gas is dissolved in the water during the whole ventilating phase. In turn, this means that the water more easily can be furnished with carbon acid, and that no carbon dioxide is lost.

In order to prolong the ventilating phase, according to a preferred embodiment the first control means 10 comprises a mechanical brake 28, arranged to delay the backspring of the first control means when the first control means is released by the user. In Figure 1 the mechanical brake is illustrated with a gear wheel 28 which is braked in a suitable known way, and running against a toothed surface 29 on an arm 30 projecting downwards from an upper arm 31 of the first control means 10. Hereby, the ventilating period becomes longer, and more gas is dissolved in the water in the water bottle.

Above, a number of embodiments have been described. However, the device according to the invention may be varied without departing from the technical function.

Therefore, the present invention shall not be limited to the above described embodiments, but may be varied within the frame of the enclosed claims.

## Claims

1. Aeration device for supplying carbon acid to water in a water bottle (1),
- where the neck of the water bottle is provided with a fastening means (2) arranged to cooperate with a corresponding fastening means (3) of a pipe end (4) of the device,
- which pipe end (4) is connected, via a controllable valve (7), with a gas bottle (6) comprising carbon dioxide,
- which valve (7) is opened by a user by the help of a non-locking first control means (10) which may be pressed down or in so that gas flows from the gas bottle (6) down into the water bottle (1) via a nozzle (9),
- said aeration device further comprising an overpressure- and ventilating valve (14) having a piston (16) which is movable in a sleeve (15), which piston is displaceable between a first, closing position and a second, opening position,
wherein:
- the piston (16) in the closing position is arranged to seal off a first outlet channel (18) from the water bottle (1), arranged at a first end (17) of the sleeve (15), and in the opening position to open the first outlet channel (18),
- a second outlet channel (20) is arranged at the said first end (17) of the sleeve, arranged so that in the opening position of the piston (16) a connection between the first outlet channel (18) and the environment via the second outlet channel (20) is opened,
- a second control means (21) is arranged in or at the sleeve (15) and arranged to be displaceable in or at the sleeve towards and away from the first end (17) of the sleeve,
- a spring (22) is arranged between the piston (16) and the end (23) of the second control means (21) located in or at the sleeve,
- the said spring (22) has a spring constant such that the overpressure- and ventilating valve (14) opens when the first control means (10) is kept pressed down or in by a user and the pressure in the water bottle (1) rises above a first predetermined value,
- a force is applied against the piston (16) when the first control means (10) is released by the user and has sprung back, which force is such that the overpressure- and ventilating valve (14) closes when the pressure in the first outlet channel (18) falls below a second predetermined value, which second predetermined value is between 1.1 and 1.5 bars.

2. Aeration device according to claim 1, **characterised in that** the said force which is applied against the piston (16) is gravitational force applied by the first control means (10) bearing upon the second control means.

3. Aeration device according to claim 1, **characterised in that** the said force which is applied against the piston (16) is applied by the said spring (22) exerting the said force as a remaining spring force when the first control means (10) is released by the user and springs back.

4. Aeration device according to claim 3, **characterised in that** the first control means (10) is displaceable in a limited manner in relation to the said second end (26) of the sleeve (15), giving rise to the said remaining spring force.

5. Aeration device according to claim 1, 2, 3 or 4, **characterised in that** the said first predetermined pressure is between 8 and 12 bars.

6. Aeration device according to claim 1, 2, 3 or 4, **characterised in that** the first control means (10) comprises a mechanical brake (28,29) arranged to delay the springback action of the first control means when the first control means is released by the user.

## Patentansprüche

1. Belüftungsvorrichtung zum Einleiten von Kohlensäure in Wasser, das sich in einer Wasserflasche (1) befindet,
- wobei der Hals der Wasserflasche mit einem Befestigungsmittel (2) versehen ist, das so angeordnet ist, dass es mit einem entsprechenden Befestigungsmittel (3) eines Rohrendes (4) der Vorrichtung zusammenwirkt,
- wobei das Rohrende (4) über ein kontrollierbares Ventil (7) mit einer Gasflasche (6), die Kohlensäure umfasst, verbunden ist,
- wobei das Ventil (7) von einem Benutzer mithilfe eines nichtverriegelnden ersten Kontrollmittels (10) geöffnet wird, das herunter- oder eingedrückt werden kann, so dass Gas aus der Gasflasche (6) über eine Düse (9) nach unten in die Wasserflasche (1) strömt,
- wobei die Belüftungsvorrichtung weiterhin ein Überdruck- und Belüftungsventil (14) mit einem Kolben (16) umfasst, der in einer Hülse (15) bewegbbar ist, wobei der Kolben zwischen einer ersten Schließposition und einer zweiten Öffnungsposition verschiebbar ist,
wobei:
- der Kolben (16) in der Schließposition so angeordnet ist, dass er einen ersten Auslasskanal (18) von der Wasserflasche (1) abdichtet, der an einem ersten Ende (17) der Hülse (15) angeordnet ist, und in der Öffnungsposition den ersten Auslasskanal (18) öffnet,
- ein zweiter Auslasskanal (20) am ersten Ende (17) der Hülse vorgesehen und so angeordnet ist, dass in der Öffnungsposition des Kolbens (16) eine Verbindung zwischen dem ersten Auslasskanal (18) und der Umgebung über den zweiten Auslasskanal (20) geöffnet ist,
- ein zweites Kontrollmittel (21) in oder an der Hülse (15) vorgesehen und so angeordnet ist, dass es in oder an der Hülse hin zum und weg vom ersten Ende (17) der Hülse verschiebbar ist,
- eine Feder (22) zwischen dem Kolben (16) und dem Ende (23) des in oder an der Hülse befindlichen zweiten Kontrollmittels (21) angeordnet ist,
- die Feder (22) eine solche Federkonstante hat, dass sich das Überdruck- und Belüftungsventil (14) öffnet, wenn das erste Kontrollmittel (10) von einem Benutzer herunter- oder eingedrückt gehalten wird und der Druck in der Wasserflasche (1) über einen ersten vorbestimmten Wert ansteigt,
- eine Kraft gegen den Kolben (16) ausgeübt wird, wenn das erste Kontrollmittel (10) vom Benutzer freigegeben wird und zurückgefedert ist, wobei die Kraft so beschaffen ist, dass sich das Überdruck- und Belüftungsventil (14) schließt, wenn der Druck im ersten Auslasskanal (18) unter einen zweiten vorbestimmten Wert absinkt, wobei der zweite vorbestimmte Wert zwischen 1,1 und 1,5 bar liegt.

2. Belüftungsvorrichtung nach Anspruch 1, **dadurch gekennzeichnet, dass** die Kraft, die gegen den Kolben (16) ausgeübt wird, durch das erste Kontrollmittel (10) auf das zweite Kontrollmittel ausgeübte Schwerkraft ist.

3. Belüftungsvorrichtung nach Anspruch 1, **dadurch gekennzeichnet, dass** die gegen den Kolben (16) ausgeübte Kraft durch die Feder (22) erfolgt, die die Kraft als eine verbleibende Federkraft ausübt, wenn das erste Kontrollmittel (10) vom Benutzer freigegeben wird und zurückfedert.

4. Belüftungsvorrichtung nach Anspruch 3, **dadurch gekennzeichnet, dass** das erste Kontrollmittel (10) in einer begrenzten Weise im Verhältnis zum zweiten Ende (26) der Hülse (15) verschiebbar ist, woraus sich die verbleibende Federkraft ergibt.

5. Belüftungsvorrichtung nach Anspruch 1, 2, 3 oder 4, **dadurch gekennzeichnet, dass** der erste vorbestimmte Druck zwischen 8 und 12 bar liegt.

6. Belüftungsvorrichtung nach Anspruch 1, 2, 3 oder 4, **dadurch gekennzeichnet, dass** das erste Kontrollmittel (10) eine mechanische Bremse (28, 29) umfasst, die angeordnet ist, um den Rückfederungsvorgang des ersten Kontrollmittels zu verzögern, wenn das erste Kontrollmittel vom Benutzer freigegeben wird.

## Revendications

1. Dispositif d'aération destiné à fournir de l'acide carbonique à de l'eau dans une bouteille d'eau (1),
- le goulot de la bouteille d'eau étant pourvu d'un moyen d'attache (2) prévu pour coopérer avec un moyen d'attache correspondant (3) d'une extrémité de tuyau (4) du dispositif,
- laquelle extrémité de tuyau (4) est connectée, par le biais d'une soupape réglable (7), à une bouteille de gaz (6) comprenant du dioxyde de carbone,
- laquelle soupape (7) est ouverte par un utilisateur au moyen d'un premier moyen de commande (10) non verrouillant qui peut être enfoncé vers le bas ou l'intérieur de telle sorte que du gaz s'écoule depuis la bouteille de gaz (6) vers le bas dans la bouteille d'eau (1) par le biais d'une buse (9),
- ledit dispositif d'aération comprenant en outre une soupape de surpression et de ventilation (14) ayant un piston (16) pouvant être déplacé dans un manchon (15), lequel piston peut être déplacé entre une première position de fermeture et une deuxième position d'ouverture,
dans lequel :
- le piston (16), dans la position de fermeture, est prévu pour sceller un premier conduit de sortie (18) par rapport à la bouteille d'eau (1), prévu au niveau d'une première extrémité (17) du manchon (15), et, dans la position d'ouverture, est prévu pour ouvrir le premier conduit de sortie (18).
- un deuxième conduit de sortie (20) est prévu au niveau de ladite première extrémité (17) du manchon, de telle sorte que dans la position d'ouverture du piston (16), une connexion soit établie entre le premier conduit de sortie (18) et l'environnement par le biais du deuxième conduit de sortie (20),
- un deuxième moyen de commande (21) est disposé dans ou au niveau du manchon (15) et est prévu pour pouvoir être déplacé dans ou au niveau du manchon vers et à l'écart de la première extrémité (17) du manchon,
- un ressort (22) est prévu entre le piston (16) et l'extrémité (23) du deuxième moyen de commande (21) situé dans ou au niveau du manchon,
- ledit ressort (22) présente une constante de ressort telle que la soupape de surpression et de ventilation (14) s'ouvre lorsque le premier moyen de commande (10) est maintenu enfoncé vers le bas ou l'intérieur par un utilisateur et que la pression dans la bouteille d'eau (1) augmente au-dessus d'une première valeur prédéterminée,
- une force est appliquée contre le piston (16) lorsque le premier moyen de commande (10) est libéré par l'utilisateur et est revenu élastiquement en arrière, ladite force étant telle que la soupape de surpression et de ventilation (14) se ferme lorsque la pression dans le premier conduit de sortie (18) tombe en dessous d'une deuxième valeur prédéterminée, laquelle deuxième valeur prédéterminée est comprise entre 1,1 et 1,5 bar.

2. Dispositif d'aération selon la revendication 1, **caractérisé en ce que** ladite force qui est appliquée contre le piston (16) est la force gravitationnelle appliquée par le premier moyen de commande (10) pressant contre le deuxième moyen de commande.

3. Dispositif d'aération selon la revendication 1, **caractérisé en ce que** ladite force qui est appliquée contre le piston (16) est appliquée par ledit ressort (22) exerçant ladite force sous forme de force de ressort résiduelle lorsque le premier moyen de commande (10) est libéré par l'utilisateur et revient élastiquement en arrière.

4. Dispositif d'aération selon la revendication 3, **caractérisé en ce que** le premier moyen de commande (10) peut être déplacé de manière limitée par rapport à ladite deuxième extrémité (26) du manchon (15), en donnant lieu à ladite force de ressort résiduelle.

5. Dispositif d'aération selon la revendication 1, 2, 3 ou 4, **caractérisé en ce que** ladite première pression prédéterminée est comprise entre 8 et 12 bars.

6. Dispositif d'aération selon la revendication 1, 2, 3 ou 4, **caractérisé en ce que** le premier moyen de commande (10) comprend un frein mécanique (28, 29) prévu pour retarder l'effet de retour élastique en arrière du premier moyen de commande lorsque le premier moyen de commande est libéré par l'utilisateur.
